# EUROPÄISCHE PATENTSCHRIFT

(11) **EP 2 920 657 B1**
(45) Veröffentlichungstag und Bekanntmachung des Hinweises auf die Patenterteilung: **13.12.2017**
(21) Anmeldenummer: 15700096.9
(22) Anmeldetag: 07.01.2015
(51) Int. Cl.: G05B 19/409, G05B 19/042

(54) **BEDIENGERÄT FÜR EINE WERKZEUGMASCHINE MIT LAGEABHÄNGIGER ZUORDNUNG VON BEDIENBEFEHLEN ZU EINZELNEN BEWEGUNGSACHSEN DER WERKZEUGMASCHINE**
OPERATING DEVICE FOR A MACHINE TOOL WITH POSITION-DEPENDENT ASSIGNMENT OF OPERATING COMMANDS TO INDIVIDUAL MOVEMENT AXES OF THE MACHINE TOOL
APPAREIL DE COMMANDE POUR UNE MACHINE-OUTIL AFFECTANT DES INSTRUCTIONS DE COMMANDE, EN FONCTION D'UNE POSITION, À DES AXES DE DÉPLACEMENT INDIVIDUELS DE LA MACHINE-OUTIL

(30) Priorität: 07.01.2014 DE 102014200066
(43) Veröffentlichungstag der Anmeldung: 23.09.2015
(73) Patentinhaber: Spinner Werkzeugmaschinenfabrik GmbH, 82054 Sauerlach (DE)
(72) Erfinder: SPINNER, Ulrich, 82054 Sauerlach (DE)
(74) Vertreter: RLTG
(86) Internationale Anmeldenummer: PCT/EP2015/050130
(87) Internationale Veröffentlichungsnummer: WO 2015/104273

(56) Entgegenhaltungen:
- EP-A1- 1 795 315
- AT-A2- 509 927
- DE-A1-102004 020 099
- DE-A1-102007 014 497
- DE-A1-102012 010 721
- DE-B3-102012 103 030
- DE-C2- 4 303 264
- DE-U1-202008 014 481
- R Mertens, H Rose, P Ligner: "Fräsen mit Kopfhörer und Joystick", 10. September 1993 (1993-09-10), Technische Rundschau No 36, Bern, Switzerland, XP000394886, Seiten 62-66, das ganze Dokument

## Beschreibung

Die vorliegende Erfindung betrifft eine Werkzeugmaschine mit wenigstens zwei, vorzugsweise mehr als zwei Bewegungseinrichtungen mit in unterschiedlichen Richtungen verlaufenden Bewegungsachsen zur Bewegung von Werkzeugen und Werkstück relativ zueinander und mit einem portablen Bediengerät gemäß dem Oberbegriff von Anspruch 1.

Weiter betrifft die vorliegende Erfindung ein Verfahren gemäß dem Oberbegriff von Anspruch 11, also ein Verfahren zur Bedienung einer Werkzeugmaschine mit wenigstens zwei, vorzugsweise mehr als zwei Bewegungseinrichtungen mit in unterschiedlichen Richtungen verlaufenden Bewegungsachsen zur Bewegung von Werkzeug und Werkstück relativ zueinander, wie sie unten beschrieben und vorteilhaft weitergebildet ist, mittels eines portablen Bediengeräts, wie es nachfolgend beschrieben und vorteilhaft weitergebildet ist.

Portable Bediengeräte an Werkzeugmaschinen sind bekannt und im Einsatz. Mit ihnen können, räumlich in Grenzen losgelöst von der Werkzeugmaschine, über die Eingabeanordnung Steuerbefehle, wie etwa Vorschubbefehle und dergleichen, sowie Daten, wie etwa Vorschubgeschwindigkeit und dergleichen, eingegeben werden.

Dabei sind portable Bediengeräte bekannt, die zum Zwecke der Miniaturisierung weniger Eingabeanordnungen aufweisen als die mit dem Bediengerät gekoppelte oder koppelbare Werkzeugmaschine Bewegungseinrichtungen und folglich unterschiedliche Bewegungsachsen aufweist. In diesem Falle ist eine Zuordnungseinrichtung vorgesehen, mit der eine am portablen Bediengerät arbeitende Bedienperson im Ergebnis dem Handbediengerät oder wenigstens der Eingabeanordnung eine der Bewegungseinrichtungen der Werkzeugmaschine zuordnen kann, für die er nachfolgend Steuerbefehle oder/und Daten am Bediengerät eingeben möchte. In einem einfachen Fall des Standes der Technik ist die Zuordnungseinrichtung eine Reihe von Schaltern, von welchen jeder einer anderen Bewegungseinrichtung zugeordnet ist, so dass durch Niederdrücken des entsprechenden Schalters eine Zuordnungsinformation betreffend die dem jeweiligen Schalter zugeordnete Bewegungseinrichtung bereitgestellt wird, um beispielsweise auf Grundlage dieser Zuordnungsinformation eine am portablen Bediengerät bzw. Handbediengerät erfolgende Steuerbefehl- oder/und Dateneingabe eindeutig auf eine derart ausgewählte und zugeordnete Bewegungseinrichtung zu beziehen.

Durch die Übertragungseinrichtung des portablen Bediengeräts, das gesondert von der Werkzeugmaschine ausgebildet und bereitgestellt ist, können die an der Eingabeanordnung eingegebenen Steuerbefehle oder/und Daten an die Werkzeugmaschine übertragen werden. Das portable Bediengerät ist hierzu dann, wenn es mit einer Werkzeugmaschine gekoppelt ist, mit dieser signalübertragungsmäßig durch eine Signalübertragungsstrecke verbunden.

Aus der DE 10 2004 020 099 A1 sind eine Werkzeugmaschine mit einem portablen Bediengerät und ein Verfahren zur Bedienung einer Werkzeugmaschine mittels eines portablen Bediengeräts der eingangs genannten Art bekannt. In der DE 10 2004 020 099 A1 kann eine von mehreren als (Roboter-)Achsen bezeichneten Bewegungseinrichtungen einer als Mehrachs-Industrieroboter bezeichneten Werkzeugmaschine dadurch ausgewählt werden, dass eine Bedienperson mit dem portablen Bediengerät auf die auszuwählende Bewegungseinrichtung zeigt.

Aus der DE 10 2007 014 497 A1 ist ein Verfahren zum Bedienen einer wenigstens einen Industrieroboter umfassenden technischen Anlage mittels eines portablen Bediengeräts bekannt. Die Auswahl eines zu bedienenden Industrieroboters erfolgt durch die Orientierung des Bediengeräts und folglich der es führenden Bedienperson dadurch, dass das Bediengerät dem auszuwählenden Industrieroboter zugewandt ist, wobei genauer auf eine Orientierung des Bediengeräts relativ zur Verbindungsgeraden zwischen dem Bediengerät und dem auszuwählenden Industrieroboter abgestellt wird. Aus der DE 10 2007 014 497 A1 ist jedoch nicht bekannt, mittels des portablen Bediengeräts eine von mehrerer Bewegungseinrichtungen an ein und demselben Industrieroboter auszuwählen.

DE10 2012 010 721 A1 offenbart ein Bediengerät für eine Maschine, welches drahtlos mit einer Bewegungseinrichtung der Maschine verbunden ist, wobei eine Bezugsachse des Bediengeräts und eine Achse der Bewegungseinrichtung definiert sind und bei Drehung bzw. Neigung des Bediengeräts, die Bewegungseinrichtung die Drehung bzw. Neigung nachführt. Es offenbart jedoch keinen Vergleich der Lage der Achse der Bewegungseinrichtung und der Achse des Bediengeräts.

Aufgabe der vorliegenden Erfindung ist es, eine Werkzeugmaschine mit einem portablen Bediengerät und ein Verfahren zum Bedienen einer Werkzeugmaschine mittels eines portablen Bediengeräts der eingangs genannten Art bereitzustellen, bei der bzw. dem die intuitive Bedienbarkeit erhöht ist.

Diese Aufgabe wird erfindungsgemäß gelöst durch eine Werkzeugmaschine mit einem portablen Bediengerät mit allen Merkmalen des Anspruchs 1 und durch ein Verfahren zur Bedienung einer Werkzeugmaschine mittels eines portablen Bediengeräts mit allen Merkmalen des Anspruchs 11.

Erfindungsgemäß erfolgt eine Zuordnung des Handbediengeräts zu einer Bewegungseinrichtung einfach durch entsprechende Lageorientierung des Bediengeräts. Das Bediengerät wird hierzu lediglich in eine einer konkreten Bewegungseinrichtung zugeordnete vorbestimmte Lageorientierung gebracht, die die Zuordnungseinrichtung mit Hilfe der genannten Sensoranordnung erkennt, wodurch die Zuordnungseinrichtung die Zuordnungsinformation, welcher Bewegungseinrichtung das Handbediengerät aktuell zugeordnet sein soll, in Abhängigkeit von dem Ergebnis der Lageorientierungserkennung bereitstellt.

Sofern im Folgenden der Betrieb bzw. die Bedienung eines Bediengeräts oder einer Werkzeugmaschine mit einem solchen Bediengerät beschrieben ist, handelt es sich dabei um Ausgestaltungen des erfindungsgemäßen Verfahrens.

Die tatsächliche Zuordnung des Handbediengeräts zu einer Bewegungseinrichtung nach Maßgabe der von der Zuordnungseinrichtung bereitgestellten Zuordnungsinformation erfolgt gemäß Anspruch 1 durch eine entsprechende Steuereinrichtung an dem portablen Bediengerät selbst oder an der mit dem portablen Bediengerät gekoppelten Werkzeugmaschine. Es genügt daher für die Zuordnungseinrichtung, lediglich die entsprechende Zuordnungsinformation bereitzustellen. Eine solche Zuordnungsinformation im Sinne der vorliegenden Anmeldung ist jede Information, die eindeutig eine Zuordnung des Bediengeräts zu einer Bewegungseinrichtung der mit dem Bediengerät gekoppelten Werkzeugmaschine ermöglicht.

Um für eine Bedienperson leichter erkennbar zu machen, wie sie das portable Bediengerät in eine vorbestimmte Lageorientierung bringen soll, damit die Zuordnungseinrichtung in Abhängigkeit vom Lageorientierungs-Erkennungsergebnis der Sensoranordnung eine Zuordnungsinformation zu einer von der Bedienperson gewünschten Bewegungseinrichtung bereitstellen kann, ist dem Bediengerät eine bediengeräteseitige Bezugsachse zugeordnet, bezüglich welcher die Sensoranordnung die Lageorientierung des Bediengeräts erfasst. Die bediengeräteseitige Bezugsachse kann eine virtuelle Achse sein, beispielsweise eine Längsachse des Bediengeräts, wenn etwa dieses in einer Raumrichtung eine größere Abmessung aufweist als in zu dieser Raumrichtung und zueinander orthogonalen weiteren Raumrichtungen. Ebenso kann die bediengeräteseitige Bezugsachse eine virtuelle Achse sein, welche mit einer Bedienfläche des Bediengeräts, die üblicherweise während einer Bedienung des Bediengeräts durch eine Bedienperson zur Bedienperson hin weist, einen Winkel einschließt, vorzugsweise einen rechten Winkel.

Das Lageorientierungs-Erkennungsergebnis kann eine Richtung umfassen oder sein, in welche die Bezugsachse im dreidimensionalen Raum verläuft. Die Richtung kann als dreidimensionaler Richtungsvektor angegeben sein.

Vorzugsweise kommt es für die Bereitstellung der lageorientierungsabhängigen Zuordnungsinformation nur auf die Lageorientierung, etwa die Erstreckungsrichtung der bediengeräteseitigen Bezugsachse, nicht jedoch auf den Aufenthaltsort an, an dem sich das Bediengerät befindet.

Zur Eingabe von Steuerbefehlen oder/und Daten betreffend eine konkrete Bewegungseinrichtung haben sich an portablen Bediengeräten um eine Radachse drehbare Handräder bewährt, die eine sehr sensible Befehls- oder/und Dateneingabe auch in schmutzbelasteter Umgebung ermöglichen. Daher ist es bevorzugt, wenn die Eingabeanordnung ein manuell um eine Radachse drehbares Handrad aufweist. Die zuvor genannte bediengeräteseitige Bezugsachse ist dabei bevorzugt die intuitiv besonders einfach von einer Bedienperson wahrnehmbare Radachse.

Das Vorsehen eines Handrades an dem portablen Bediengerät soll eine virtuelle Bezugsachse nicht ausschließen. Beispielsweise kann gemäß einer vorteilhaften Weiterbildung der vorliegenden Erfindung vorgesehen sein, dass das portable Bediengerät eine Multifunktions-Anzeigevorrichtung, etwa einen berührungssensitiven Bildschirm, umfasst, wobei das Handrad ein wenigstens vorübergehend auf der Multifunktions-Anzeigevorrichtung darstellbares oder dargestelltes virtuelles Handrad sein kann.

Alternativ oder zusätzlich kann jedoch daran gedacht sein, dass das Handrad ein reales körperliches Handrad ist, welches um die Radachse drehbar an einem Gehäuse des Bediengeräts angeordnet ist. Ein reales körperliches Handrad ist gerade in schmutzbelasteter Umgebung einer Werkzeugmaschine von Vorteil, da ein Handangriff der Bedienperson am Handrad auch mit schmutzigen Händen möglich ist und eine sichere und sensible Befehls- oder/und Dateneingabe in das portable Bediengerät ermöglicht. Letzteres ist mit auf Multifunktions-Anzeigevorrichtungen dargestellten virtuellen Handrädern nicht in jedem Fall gewährleistet.

Außerdem kann mit einem realen körperlichen Handrad unter Umständen ein ergonomischeres portables Bediengerät mit geringen äußeren Abmessungen bereitgestellt werden, da das drehbare Handrad in beliebiger Lageorientierung relativ zu einem Gehäuse des Bediengeräts an diesem angeordnet sein kann. Somit ist auch die bevorzugt die Bezugsachse des portablen Bediengeräts bildende Radachse beliebig und folglich ergonomisch vorteilhaft anordenbar. Demgegenüber wird ein virtuell auf einer Multifunktions-Anzeigevorrichtung dargestelltes virtuelles Handrad in der Regel eine Radachse aufweisen, welche orthogonal zu einer Anzeigefläche der Multifunktions-Anzeigevorrichtung ausgerichtet ist.

Es soll jedoch nicht ausgeschlossen ein, dass eine andere Achse als die Radachse die bediengeräteseitige Bezugsachse ist, insbesondere wenn dies ergonomisch vorteilhaft ist.

Zur ausreichenden Erkennung der absoluten Lageorientierung des portablen Bediengeräts im Raum kann die Sensoranordnung einen Erdmagnetfeldsensor und einen Absolutbeschleunigungssensor umfassen. Der Erdmagnetfeldsensor erfasst die Lageorientierungskoordinate der Struktur, mit der er fest verbunden ist, bezüglich des Erdmagnetfelds und kann somit die Lageorientierungskoordinate der ihn tragenden Struktur an jedem Punkt der Erdkugel als Richtungsangabe in einer Tangentialebene zur Erdkugeloberfläche am Ort des Betrachters angeben.

Der Absolutbeschleunigungssensor kann die Lageorientierungskoordinate der ihn tragenden Struktur bezüglich der Schwerkraftwirkungsrichtung erfassen. Somit kann ein Absolutbeschleunigungssensor die Lageorientierungskoordinate der ihn tragenden Struktur als Richtung bezüglich einer Lotgeraden auf die zuvor genannte Tangentialebene am Ort des Betrachters angeben. Mit den so erfassten Koordinaten ist die Lageorientierung der die Sensoranordnung tragenden Struktur insgesamt in drei kartesischen Koordinaten, vorzugsweise mit einer in Schwerkraftwirkungsrichtung verlaufenden Achse, oder in Polarkoordinaten mit zwei zueinander orthogonalen Koordinatensystemachsen, wiederum mit vorzugsweise einer in Schwerkraftwirkungsrichtung verlaufenden Koordinatenachse, einem ersten mit der ersten Koordinatenachse eingeschlossenen Winkel und mit einem zweiten mit der zweiten Koordinatenachse eingeschlossenen Winkel darstellbar. Die Lageorientierung der Sensoranordnung bzw. der ihn tragenden Struktur, in diesem Falle des portablen Bediengeräts, ist somit im dreidimensionalen Raum eindeutig bestimmbar.

Die genannten Sensoren sind zur schnellen Erfassung der Lageorientierung und unter Vermeidung unnötiger Rechenoperationen bevorzugt derart am portablen Bediengerät angeordnet, dass die Lageorientierungserkennung durch die Sensoranordnung eine Lageorientierungserkennung der zuvor bevorzugt genannten bediengeräteseitigen Bezugsachse des portablen Bediengeräts im dreidimensionalen Raum liefert.

Da das portable Bediengerät in der Regel, wenngleich mit gewissem Abstand, jedoch in unmittelbarer Nähe der durch das Bediengerät gesteuerten Werkzeugmaschine verwendet werden wird, und da weiter die Werkzeugmaschine, etwa in ihren Bewegungseinrichtungen und in ihrer Arbeitsspindel, über elektrische Antriebe verfügt, kann das Risiko bestehen, dass die Sensoranordnung durch von der Werkzeugmaschine ausgehende Magnetfelder (so genannten "Elektrosmog") in ihrer Erkennungsgenauigkeit beeinträchtigt wird. Um diese Beeinträchtigung zu kompensieren oder möglichst zu verringern, kann die Sensoranordnung zusätzlich zu den oben genannten Sensoren: Erdmagnetfeldsensor und Absolutbeschleunigungssensor, wenigstens ein Gyroskop aufweisen. Vorzugsweise umfasst die Sensoranordnung wenigstens drei Gyroskope, deren Gyroskopachsen in voneinander linear unabhängige Raumrichtungen weisen, etwa in zueinander orthogonale Raumrichtungen, wie dies bei einem kartesischen rechtwinkligen Koordinatensystem der Fall ist.

Aus Gründen einer bevorzugten kompakten Bauweise sind Gyroskope der MEMS-Bauweise bevorzugt (MEMS = "Micro-Electro-Mechanical-Systems" = mikro-elektromechanische Systeme).

Mitunter kann es gewünscht sein, dass das Bediengerät nicht nur Steuerbefehle oder/und Daten betreffend eine konkrete, durch bewusste Lageorientierung des portablen Bediengeräts ausgewählte Bedieneinrichtung zur Werkzeugmaschine hin überträgt, sondern auch Daten, insbesondere über die ausgewählte Bewegungseinrichtung, von der Werkzeugmaschine erhält, etwa zur Anzeige oder sonstigen wahrnehmbaren Ausgaben solcher Daten. Daher ist gemäß einer vorteilhaften Weiterbildung der vorliegenden Erfindung bevorzugt, dass die Übertragungseinrichtung zur bidirektionalen Signalübertragung zwischen dem Bediengerät und der Werkzeugmaschine ausgebildet ist.

Eine mögliche Art von Bewegungseinrichtungsdaten, die von der Werkzeugmaschine zur Ausgabe am portablen Bediengerät übertragen werden können, können Daten über Kräfte sein, welche während einer Bearbeitung eines Werkstücks durch ein Werkzeug an der Bearbeitungsstelle auftreten. Daher ist gemäß einer bevorzugten Weiterbildung der vorliegenden Erfindung vorgesehen, dass das portable Bediengerät über eine Force-Feedback-Einrichtung verfügt, welche dazu ausgebildet ist, in Abhängigkeit von von der Werkzeugmaschine erhaltenen Daten an der Bearbeitungsstelle auftretende Kräfte am Bediengerät optisch oder/und akustisch oder/und taktil oder/und haptisch wahrnehmbar auszugeben. Die optische Ausgabe von auftretenden Kräften kann beispielsweise im einfachsten Fall durch eine Warnlampe geschehen, die bei Annäherung der Bearbeitungskräfte an vorbestimmte Grenzkräfte aufleuchtet oder kann durch eine mehr oder weniger beliebig gestaltbare Anzeige an einer Multifunktions-Anzeigevorrichtung erfolgen.

Akustisch lassen sich Kräfte im einfachsten Falle bei Annäherung an Grenzkräfte durch Aktivieren eines Warntons oder beispielsweise kontinuierlich durch Modulation eines die Kräfte repräsentierenen Tons oder Geräuschs ausgeben.

Taktil kann beispielsweise unerwünschtes Rütteln oder Rattern des Werkzeugs oder Werkstücks an der Bearbeitungsstelle dadurch wahrnehmbar ausgegeben werden, dass wenigstens der von einer Bedienperson bestimmungsgemäß bei der Handhabung des Bediengeräts berührte Abschnitt desselben in Vibration versetzt wird, wobei die Intensität der Vibration die Intensität des Rüttelns an der Bearbeitungsstelle wiedergeben kann.

Haptisch können Kräfte an der Bearbeitungsstelle beispielsweise durch einen bei Verstellung des Handrads um seine Radachse erhöhten bzw. erhöhbaren und verringerbaren Verstellwiderstand wahrnehmbar ausgegeben werden.

Gemäß einer möglichen Weiterbildung der vorliegenden Erfindung kann die Zuordnungseinrichtung des Bediengeräts eine Festlegeeinrichtung aufweisen, durch deren Betätigung die Bedienperson anzeigt, dass eine augenblicklich durch Lageorientierung des portablen Bediengeräts ausgewählte Bewegungseinrichtung bis zu einer erneuten Eingabe als ausgewählte Bewegungseinrichtung festgelegt bleiben soll, so dass die Bedieneinrichtung aus ihrer durch Auswahl einer konkreten Bewegungseinrichtung der Werkzeugmaschine bedingten Lageorientierung herausbewegt werden kann, ohne dass dies die von der Zuordnungsanordnung bereitgestellte Zuordnungsinformation beeinflusst. Dadurch kann die Bedienperson das Bediengerät zur weiteren Bedienung der ausgewählten Bewegungseinrichtung in eine Lageorientierung bringen, welche ergonomisch vorteilhafter ist als die zur Auswahl der betreffenden Bewegungseinrichtung benötigte Lageorientierung. Die Feststelleinrichtung kann beispielsweise durch wiederholte Betätigung aktivierbar und alternierend hierzu deaktivierbar sein oder kann dergestalt realisiert sein, dass die Festlegung für die Dauer ihrer Betätigung erfolgt und mit dem Ende der Betätigung endet.

Ebenso kann die Zuordnungseinrichtung eine Starteinrichtung aufweisen, mit der ein Lageorientierungs-Erkennungsvorgang durch die Sensoranordnung bzw. Zuordnungseinrichtung eingeleitet werden kann. Ein Lageorientierungs-Erkennungsvorgang kann jedoch auch kontinuierlich ablaufen.

Vorzugsweise weist das portable Bediengerät eine Anzeigevorrichtung auf, welche der Bedienperson Informationen über die von der Zuordnungseinrichtung bereitgestellte Zuordnungsinformation anzeigt, etwa eine ausgewählte Bewegungseinrichtung anzeigt. Dies kann die oben genannte Multifunktions-Anzeigevorrichtung oder eine gesondert davon vorgesehene Anzeigevorrichtung sein.

Wie eingangs dargelegt, reicht es für die vorliegende Erfindung aus, wenn die Zuordnungseinrichtung Zuordnungsinformation bereitstellt, die eine Zuordnung des portablen Bediengeräts zu einer Bewegungseinrichtung gestattet. Die tatsächliche Zuordnung des Bediengeräts und damit der an ihm eingegebenen Steuerbefehle oder/und Daten zu einer Bewegungseinrichtung kann dann am Bediengerät selbst oder an der Werkzeugmaschine erfolgen. Hierzu ist gemäß Anspruch 1 an der Werkzeugmaschine oder/und an dem Bediengerät eine Steuereinrichtung vorgesehen, welche dazu ausgebildet ist, am Bediengerät eingegebene Steuerbefehle oder/und Daten in Abhängigkeit von der von der Zuordnungseinrichtung bereitgestellten Zuordnungsinformation einer der Bewegungseinrichtungen zuzuordnen. Der entsprechende Verfahrensschritt ist Gegenstand des Anspruchs 12. Dann, wenn die Steuereinrichtung am Bediengerät vorgesehen ist, kann diese Teil der Zuordnungseinrichtung sein.

Wie oben dargelegt wurde, kann das portable Bediengerät gemäß einem vorteilhaften Aspekt einer Weiterbildung auch Daten von der Werkzeugmaschine wahrnehmbar ausgeben, etwa durch die oben genannte Force-Feedback-Einrichtung. Hierzu kann vorgesehen sein, dass die Steuereinrichtung die Force-Feedback-Einrichtung derart ansteuert, dass die Force-Feedback-Einrichtung an der Bearbeitungsstelle auftretende Kräfte am Bediengerät in Abhängigkeit von der von der Zuordnungseinrichtung bereitgestellten Zuordnungsinformation wahrnehmbar ausgibt. Wiederum kann hierzu die Steuereinrichtung entweder an der Werkzeugmaschine oder am portablen Bediengerät vorgesehen sein. In letztem Fall kann sie Teil der Force-Feedback-Einrichtung selbst sein. Die Ausgabe von an der Bearbeitungsstelle auftretenden Kräften in Abhängigkeit von der bereitgestellten Zuordnungsinformation kann beispielsweise derart erfolgen, dass nur jene in Richtung der Bewegungsachse der aktuell ausgewählten Bewegungseinrichtung wirkende Kräfte am Bediengerät ausgegeben werden.

Es soll jedoch nicht ausgeschlossen sein, dass die Force-Feedback-Einrichtung an der Bearbeitungsstelle auftretende Kräfte unabhängig von einer augenblicklich ausgewählten Bewegungseinrichtung anzeigt, etwa dann, wenn diese Kräfte sicherheitsrelevante Beträge oder/und Richtungen erreichen.

Das portable Bediengerät ist erfindungsgemäß dadurch zur Auswahl und Zuordnung einer konkreten Bewegungseinrichtung aus einer Mehrzahl von Bewegungseinrichtungen der Werkzeugmaschine ausgebildet, dass die Werkzeugmaschine oder/und das Bediengerät einen Datenspeicher aufweist, in welchem Informationen über die Lageorientierung der einzelnen Bewegungsachsen, oder allgemein von werkzeugmaschinenseitigen Bezugsachsen für die einzelnen Bewegungseinrichtungen, und über wenigstens einen Lageorientierungs-Toleranzbereich gespeichert sind, wobei die Zuordnungseinrichtung dazu ausgebildet ist, als Zuordnungsinformation eine Verknüpfung des portablen Bediengeräts mit einer konkreten Bewegungseinrichtung dann bereitzustellen, wenn ein Vergleich des Ergebnisses der Erkennung der Lageorientierung des Bediengeräts mit den gespeicherten Informationen über die Lageorientierung der einzelnen Bewegungsachsen bzw. werkzeugmaschinenseitigen Bezugsachsen anzeigt, dass die erkannte Lageorientierung der bediengeräteseitigen Bezugsachse von einer vorbestimmten Lagebeziehung zur Bewegungsachse bzw. werkzeugmaschinenseitigen Bezugsachse der konkreten Bewegungseinrichtung um nicht mehr als den gespeicherten Lageorientierungs-Toleranzbereich abweicht.

Eine Zuordnung des portablen Bediengeräts zu einer Bewegungseinrichtung erfolgt erfindungsgemäß dann in einfacher Art und Weise durch die Bedienperson dadurch, dass das Bediengerät mit seiner oben genannten bediengeräteseitigen Bezugsachse innerhalb eines vorbestimmten Toleranzbereichs in einer vorbestimmten Lagebeziehung zu der werkzeugmaschinenseitigen Bezugsachse, insbesondere Bewegungsachse, der auszuwählenden Bewegungseinrichtung orientiert wird. Dies entspricht dem von der Bedienperson auszuführenden Schritt des erfindungsgemäßen Verfahrens zur Bedienung der Werkzeugmaschine mittels des Bediengeräts nach Anspruch 11.

Gemäß den Ansprüchen 2 und 14 ist diese Lagebeziehung bevorzugt die Parallelität. Dann kann also die Bedienperson eine Bewegungseinrichtung dem Bediengerät im Ergebnis dadurch zuordnen, dass es die Bezugsachse des Bediengeräts innerhalb des vorbestimmten Toleranzbereichs parallel zur Bezugsachse, insbesondere Bewegungsachse, der auszuwählenden konkreten Bewegungseinrichtung orientiert.

Durch die oben erwähnte vorteilhafte Feststelleinrichtung kann die so vorgenommene Auswahl bzw. Verknüpfung der Bewegungseinrichtung mit dem Bediengerät auch nach einer Aufgabe der für die Auswahl notwendigen Lagebeziehung zwischen bediengeräteseitiger und werkzeugmaschinenseitiger Bezugsachse beibehalten werden.

Die vorbestimmten Toleranzbereiche können so gewählt sein, dass ihre Grenzen mit Abstand voneinander angelegt sind, so dass ein außerhalb aller Toleranzbereiche gelegener freier Bereich existieren kann, für den keine Verknüpfungsbeziehung zwischen der Bezugsachse des Handbediengeräts und einer Bewegungsachse der Werkzeugmaschine besteht. Dies verringert das Risiko von Fehlbedienungen.

Die Bewegungsachsen der Bewegungseinrichtungen der Werkzeugmaschine können rotatorische Bewegungsachsen oder/und translatorische Bewegungsachsen sein. Dies ist unter anderem Gegenstand der Ansprüche 3 und 13.

Das portable Bediengerät weist ein von der Werkzeugmaschine gesondert ausgebildetes Bediengerätgehäuse auf. Dadurch kann das portable Bediengerät relativ zur Werkzeugmaschine in nahezu beliebiger Weise lageorientiert werden. Die Signalübertragung zur Übertragung von Steuerbefehlen oder/und Daten zwischen der Werkzeugmaschine und dem Bediengerät kann drahtlos, also beispielsweise durch Funkstrecke oder/und durch eine Infrarotstrecke realisiert sein. Beispielsweise kann das Bediengerät signalübertragungsmäßig durch eine Bluetooth®-Verbindung, WLAN-Verbindung oder DECT-Verbindung mit einer Steuereinheit der Werkzeugmaschine gekoppelt sein. Besonders robust, insbesondere in Umgebungen mit elektromagnetischen Störfeldern, ist jedoch eine Kabelverbindung zwischen dem portablen Bediengerät und der Werkzeugmaschine, die deshalb nicht ausgeschlossen sein soll.

Das portable Bediengerät kann zu Beginn seines Betriebs, etwa einmalig nach Aufstellen der Werkzeugmaschine, oder gewünschtenfalls in regelmäßigen zeitlichen Abständen wiederholt, durch ein Teach-In-Verfahren auf die Werkzeugmaschine referenziert werden. Dadurch können unterschiedliche Lageorientierungen des portablen Bediengeräts unterschiedlichen Bewegungseinrichtungen der Werkzeugmaschine zugeordnet werden. Diese Zuordnungen können in einem Datenspeicher hinterlegt werden, der an der Werkzeugmaschine oder/und am portablen Bediengerät vorgesehen sein kann.

Die vorliegende Erfindung wird nachfolgend anhand der beiliegenden Figuren näher erläutert. Es zeigt:

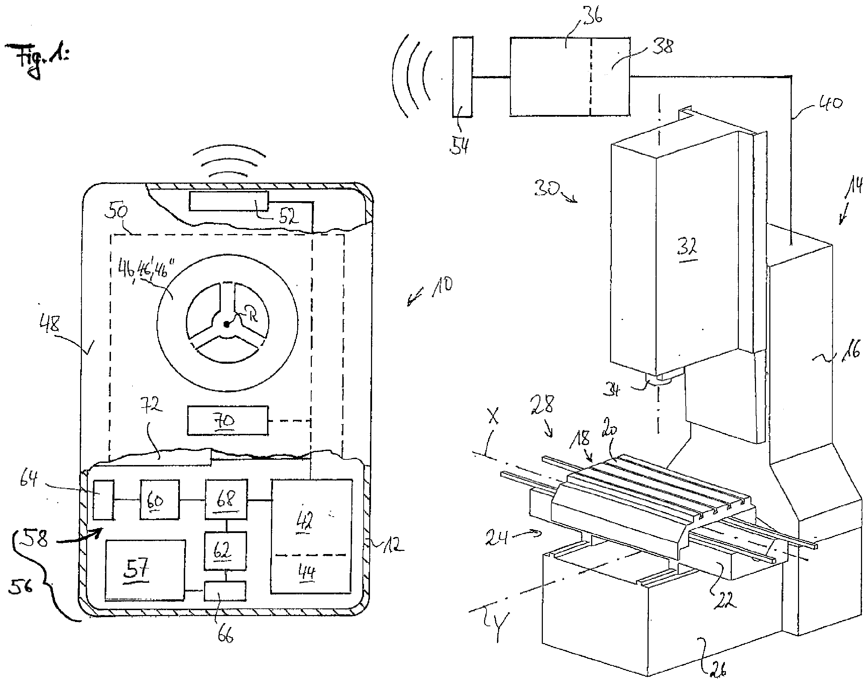

- Fig. 1: ein portables Bediengerät in Signalübertragungsverbindung mit einer mit dem Bediengerät gekoppelten Werkzeugmaschine gemäß einer erfindungsgemäßen Ausführungsform.

In Fig. 1 ist ein portables Bediengerät einer erfindungsgemäßen Ausführungsform allgemein mit 10 bezeichnet. Das portable Bediengerät weist in der Regel ein Gehäuse 12 auf, welches zur Durchlässigkeit von elektromagnetischen Strahlen bevorzugt aus Kunststoff gebildet ist. Es kann sich jedoch auch um ein Metallgehäuse handeln.

Das portable Bediengerät ist mit einer allgemein mit 14 bezeichneten Werkzeugmaschine signalübertragungsmäßig gekoppelt. Die Werkzeugmaschine 14 weist im dargestellten Beispiel einen Maschinenständer 16 auf, an dem mehrere Bewegungseinrichtungen zur Relativbewegung eines von der Werkzeugmaschine 14 bearbeiteten nicht dargestellten Werkstücks relativ zu einem von der Werkzeugmaschine 14 angetriebenen nicht dargestellten Werkzeug realisiert sind. Lediglich beispielhaft und ohne jegliche Einschränkung zeigt die Werkzeugmaschine 14 des Ausführungsbeispiels eine erste horizontale Bewegungseinrichtung 18, welche in an sich bekannter Weise elektromotorisch angetrieben einen Werkstücktisch 20 längs einer im Folgenden als X-Achse bezeichneten Bewegungsachse verlagern kann.

Im dargestellten Beispiel bildet eine den Werkstücktisch 20 längs der X-Achse relativ verfahrbare tragende Tragstruktur 22 der ersten Bewegungseinrichtung 18 ein Bewegungsteil einer zweiten horizontalen Bewegungseinrichtung 24, die eine maschinenständerfeste Stützstruktur 26 umfasst, an welcher die Tragstruktur 22 und damit die erste Bewegungseinrichtung 18 insgesamt längs einer zur X-Achse orthogonalen, horizontalen Y-Achse motorisch angetrieben verlagerbar ist. Die erste Bewegungseinrichtung 18 und die zweite Bewegungseinrichtung 24 bilden somit in im Grunde an sich bekannter Weise eine horizontale Kreuztischanordnung 28.

Jede der Bewegungseinrichtungen 18 und 24 weist Linearführungseinrichtungen zur Führung des Bewegungsteils 20 relativ zur Tragstruktur 22 längs der X-Achse bzw. zur Führung der Tragstruktur 22 relativ zur Stützstruktur 26 längs der Y-Achse auf. Damit die Bewegungseinrichtungen 18 und 24 die an ihren jeweiligen Basisstrukturen: Stützstruktur 26 und Tragstruktur 22, beweglich aufgenommenen Teile gesondert voneinander zur Linearbewegung antreiben können, weist jede der Bewegungseinrichtungen 18 und 24 vorzugsweise einen eigenen, gesondert antreibbaren Bewegungsantrieb auf, etwa einen Spindeltrieb oder einen Linearmotor.

Weiter weist die beispielhaft dargestellte Werkzeugmaschine 14 eine dritte Bewegungseinrichtung 30 auf, welche einen vertikal relativ zum Maschinenständer 16 längs einer als Z-Achse bezeichneten Bewegungsachse verfahrbaren Schlitten 32 umfasst. Am Schlitten 32 kann eine Arbeitsspindel 34 vorgesehen sein, an welcher ein Werkzeug zur Werkstückbearbeitung aufnehmbar ist. Auch die dritte Bewegungseinrichtung 30 weist in der Regel gesonderte Linearführungsmittel und einen eigenen Antrieb auf, wiederum etwa einen Spindeltrieb oder einen Linearmotor.

Lediglich grobschematisch ist eine an der Werkzeugmaschine 14 fest vorgesehene Steuervorrichtung 36 dargestellt, welche die Antriebe der einzelnen Bewegungseinrichtungen 18, 24 und 30 abhängig von äußeren Eingaben oder/und vordefinierten Ablaufprogrammen anzusteuern vermag. Die Steuervorrichtung 36 der Werkzeugmaschine 14 kann mit einer in Fig. 1 nicht dargestellten Eingabevorrichtung der Werkzeugmaschine 14 verbunden sein, um auch an der Werkzeugmaschine 14 eine Eingabe von Steuerbefehlen oder/und Daten in die Steuervorrichtung 36 zu ermöglichen. Die Steuervorrichtung 36 kann einen Datenspeicher 38 umfassen, in dem die Steuervorrichtung 36 u. a. Daten abspeichern kann und aus welchem sie abgespeicherte Daten abrufen kann. Die Steuervorrichtung 36 ist mit den Antrieben der Bewegungseinrichtungen 18, 24 und 30 durch eine lediglich grobschematisch angedeutete Signalübertragungsleitung 40 signalübertragungsmäßig verbunden. Die in der Signalübertragungsleitung 40 übertragenen Signale können Steuerbefehle oder/und Daten sein.

Zur Erhöhung des Bedienkomforts ist das portable, damit vom Maschinenständer 16 der Werkzeugmaschine 14 losgelöste und relativ zu diesem frei bewegliche Bediengerät 10 vorgesehen.

Das Bediengerät 10 ist im Teilschnitt gezeigt, wobei es eine Steuereinrichtung 42 umfassen kann, welche wiederum - analog zur Steuervorrichtung 36 der Werkzeugmaschine 14 - mit einem Datenspeicher 44 zum Abspeichern und Abrufen von Daten kooperieren kann.

Das portable Bediengerät 10 weist weiter eine Eingabeanordnung 46 auf, welche in Form eines um eine Radachse R drehbaren Handrades ausgebildet sein kann. Das Handrad 46 kann ein reales Handrad 46' sein oder kann ein virtuelles, lediglich auf einer Anzeigevorrichtung dargestelltes Handrad 46" sein.

Eine zur Bedienperson hin weisende Vorderseite bzw. Bedienseite 48 des portablen Bediengeräts 10 kann hierzu eine strichliniert im Umriss angedeutete Multifunktions-Anzeigevorrichtung 50 aufweisen, etwa einen Bildschirm bzw. ein Display. Die Radachse R ist im dargestellten Beispiel orthogonal zur Bedienseite 48 und orthogonal zur Zeichenebene der Fig. 1 orientiert. Es sind jedoch auch andere Orientierungen möglich.

An der Eingabeanordnung 46 eingegebene Steuerbefehle oder/und Daten können drahtlos durch eine Übertragungseinrichtung 52, etwa eine Infrarot- oder noch bevorzugter eine Funk-Sende/Empfangseinrichtung zur Werkzeugmaschine 14 übertragen werden, die eine auf die Übertragungseinrichtung 52 abgestimmte Übertragungsvorrichtung 54, wiederum bevorzugt eine Sende/Empfangsvorrichtung, aufweist, die mit der Steuervorrichtung 36 der Werkzeugmaschine 14 signalübertragungsmäßig verbunden ist. Die werkzeugmaschinenseitige Übertragungsvorrichtung 54 ist im dargestellten Beispiel durch die Steuervorrichtung 36 ebenso ansteuerbar, wie die Übertragungseinrichtung 52 des portablen Bediengeräts 10 durch die Steuereinrichtung 42 ansteuerbar ist.

Das portable Bediengerät 10 weist weniger Eingabeanordnungen 46 auf, im dargestellten Beispiel genau ein Handrad 46, als die Werkzeugmaschine 14 Bewegungseinrichtungen aufweist, die durch die Eingabeanordnung 46 mit Steuerbefehlen oder/und Daten versorgt bzw. gesteuert werden können. Daher weist das portable Bediengerät 10 eine Zuordnungseinrichtung 56 auf, welche einen Mikroprozessor 57 aufweisen kann.

Die Zuordnungseinrichtung 56 stellt eine Zuordnungsinformation bereit, auf deren Grundlage die Eingaben an der Eingabeanordnung 46 einer der Bewegungseinrichtungen 18, 24 und 30 zugeordnet werden können.

Bei der erfindungsgemäßen Ausführungsform des portablen Bediengeräts 10 geschieht die Bereitstellung dieser Zuordnungsinformation lageorientierungsabhängig. Dabei wird eine bediengeräteseitige Bezugsachse, im vorliegenden Beispiel vorteilhaft die Radachse R, in eine einer der Bewegungseinrichtungen 18, 24 und 30 zugeordnete vorbestimmte Lageorientierung gebracht, wobei die Zuordnungseinrichtung 56 diese Lageorientierung erkennt. Hierzu kann die Zuordnungseinrichtung 56 auf eine Sensoranordnung 58 zurückgreifen, welche vorteilhaft zur Erkennung der absoluten Lageorientierung der Radachse R im Raum einen Erdmagnetfeldsensor 60 und einen Absolutbeschleunigungssensor 62 aufweist. Der Erdmagnetfeldsensor 60 kann dabei die Lage der Radachse R als der bevorzugten Bezugsachse des Bediengeräts 10 relativ zur Nord-Süd-Richtung des Erdmagnetfelds erkennen. Der Absolutbeschleunigungssensor 62 kann die Lage der Radachse R als der bevorzugten bediengeräteseitigen Bezugsachse relativ zur Schwerkraftwirkungsrichtung erkennen. Durch diese beiden Richtungsangaben ist die absolute Lage der Radachse R im Raum erkennbar. Diese Erkennung kann in der Zuordnungseinrichtung 56 oder in der Steuereinrichtung 42 vollzogen werden.

Da das Bediengerät 10 in unmittelbarer Nähe zur Werkzeugmaschine 14 benutzt werden wird und die Antriebe der Bewegungseinrichtungen 18, 24 und 32 in der Regel elektromagnetische Antriebe sein werden, kann die Arbeitsumgebung des portablen Bediengeräts 10 durch von der Werkzeugmaschine 14 ausgehende elektromagnetische Felder, so genannten Elektrosmog, belastet sein. Damit diese Belastung, die sich auf die Sensoren 60 und 62 auswirken kann, kompensierbar ist, weist die Sensoranordnung 58 vorzugsweise weiter drei Gyroskope 64, 66 und 68 auf, die mit zueinander paarweise orthogonalen Gyroskopachsen orientiert im Gehäuse 12 des portablen Bediengeräts 10 angeordnet sein können. Die Gyroskopachsen der einzelnen Gyroskope 64, 66 und 68 bilden bevorzugt ein rechtwinkliges Dreibein, können jedoch auch in anderen voneinander linear unabhängigen Raumrichtungen angeordnet sein.

Durch die Information von den Gyroskopen 64, 66 und 68, die aus Gründen einer Minimierung der Bauraumanforderung bevorzugt in der so genannten MEMS-Bauweise ausgeführt sind, können etwaige streumagnetfeldbedingte Abweichungen der Sensoren 60 und 62 kompensiert werden.

Die Bereitstellung von Zuordnungsinformation durch die Zuordnungseinrichtung 56 geschieht wie folgt

In dem Datenspeicher 44 des Bediengeräts 10 oder in dem Datenspeicher 38 der Werkzeugmaschine 14 sind werkzeugmaschinenseitige Bezugsachsen gespeichert, wobei jeder Bewegungseinrichtung 18, 24 und 30 eine andere eindeutige werkzeugmaschinenseitige Bezugsachse zugeordnet ist. Die Bezugsachsen können im einfachsten Fall als einfache Raumrichtungen in einem dreidimensionalen Raum angegeben sein. Vorzugsweise sind die Bewegungsachsen X, Y und Z bzw. deren Verlaufsrichtungen die den jeweiligen Bewegungseinrichtungen 18, 24 bzw. 30 zugeordneten werkzeugmaschinenseitigen Bezugsachsen.

Weiter kann im bediengeräteseitigen Datenspeicher 44 oder dem werkzeugmaschinenseitigen Datenspeicher 38 ein Toleranzbereich gespeichert sein, welcher den einzelnen werkzeugmaschinenseitigen Bezugsachsen zugeordnet ist. Es kann auch jeder werkzeugmaschinenseitigen Bezugsachse ein eigener Toleranzbereich zugeordnet sein, welcher von den Toleranzbereichen der übrigen werkzeugmaschinenseitigen Bezugsachsen verschieden ist.

Zur Zuordnung des portablen Bediengeräts 10 zu einer der Bewegungseinrichtungen 18, 24 oder 30 der Werkzeugmaschine 14 bringt nun eine mit dem Bediengerät 10 arbeitende Bedienperson dieses portable Bediengerät 10 in eine wohldefinierte Lageorientierung und zwar derart, dass die Bezugsachse des portablen Bediengeräts 10, hier: die Radachse R, eine vorbestimmte Lagebeziehung zu der der werkzeugmaschinenseitigen, der gewünschten Bewegungseinrichtung zugeordneten Bezugsachse hat. Eine bevorzugte derartige Lagebeziehung ist die Parallelität.

Nachdem die Sensoranordnung 58 die Lageorientierung der Radachse R im Raum erfasst hat, vergleicht der Mikroprozessor 57 der Zuordnungseinrichtung 56 die aktuell erfasste Lageorientierung der Radachse R mit den in einem der Datenspeicher 44 oder 38 hinterlegten Lageorientierungen der den Bewegungseinrichtungen 18, 24 und 30 zugeordneten werkzeugmaschinenseitigen Bezugsachsen, insbesondere deren Bewegungsachsen X, Y und Z.

Dann, wenn sich die Lageorientierung der bediengeräteseitigen Bezugsachse, also hier: der Radachse R, von der Lageorientierung einer werkzeugmaschinenseitigen Bezugsachse um nicht mehr als den der jeweiligen Bezugsachse zugeordneten Toleranzbereich unterscheidet, erkennt die Zuordnungseinrichtung 56, dass das Bediengerät 10 der der jeweiligen werkzeugmaschinenseitigen Bezugsachse zugeordneten Bewegungseinrichtung zugeordnet werden soll und stellt eine entsprechende Information bereit. Die Information kann an die Steuereinrichtung 42 des Bediengeräts 10 gegeben werden oder kann im Datenspeicher 44 des Bediengeräts 10 hinterlegt werden oder kann mittels der Übertragungseinrichtung 52 zur Werkzeugmaschine 14 übertragen und dort in den werkzeugmaschinenseitigen Datenspeicher 38 eingegeben werden.

Damit die Bedienperson das portable Bediengerät 10 nicht über die gesamte Dauer der Bedienung, die eine wie oben beschrieben ausgewählte Bewegungseinrichtung 18, 24 oder 32 betrifft, hinweg in der vorbestimmten Lagebeziehung zwischen Radachse R und der Bezugsachse der betreffenden Bewegungseinrichtung halten muss, kann am portablen Bediengerät 10 eine Festlegeeinrichtung 70 in Form einer niederdrückbaren Taste oder eines virtuellen Tastenfelds auf der Multifunktions-Anzeigevorrichtung 50 vorgesehen sein. Durch Betätigen der Festlegeeinrichtung 70 wird eine zuletzt bereitgestellte Zuordnungsinformation beibehalten, auch wenn zwischenzeitlich die Radachse R unbeabsichtigt in den Toleranzbereich einer anderen werkzeugmaschinenseitigen Bezugsachse gelangt.

Ebenso kann am portablen Bediengerät 10 der vorliegenden Erfindung eine Zuordnungs-Start-Einrichtung vorgesehen sein, wiederum etwa als Taste oder Schalter, bei deren Betätigung der Zuordnungsvorgang, wie er oben beschrieben wurde, eingeleitet wird. Dies hat den Vorteil, dass eine unerwünschte Zuordnung des Bediengerätes 10 aufgrund einer zufällig vorübergehend erreichten zuordnungsrelevanten Lagebeziehung zu einer der werkzeugmaschinenseitigen Bezugsachsen, insbesondere zu einer der Bewegungsachsen X, Y und Z, vermieden werden kann. Die Bedienperson kann dann bewusst einen Zuordnungsvorgang einleiten und diesen sichern.

Zur Rückmeldung von Daten von der Werkzeugmaschine 14 über die Übertragungsvorrichtung 54 und die Übertragungseinrichtung 52 kann das portable Bediengerät 10 eine Force-Feedback-Einrichtung 72 aufweisen, welche beispielsweise dazu ausgebildet sein kann, einen Abschnitt des Gehäuses 12 in Vibration zu versetzen, um einer Bedienperson, die das portable Bediengerät 10 in ihren Händen hält, taktil eine Information auszugeben. Dadurch können Informationen auch in lauter und schmutziger Umgebung wahrnehmbar ausgegeben werden, in denen die Wahrnehmung eines akustischen oder optischen Signals nicht immer sichergestellt ist.

Der am Ausführungsbeispiel gezeigte Mikroprozessor 57 ist entbehrlich. Seine Aufgaben können auch von der bediengeräteseitigen Steuereinrichtung 42 übernommen werden.

## Patentansprüche

1. Werkzeugmaschine (14) mit wenigstens zwei Bewegungseinrichtungen (18, 24, 30) mit in unterschiedlichen Richtungen verlaufenden Bewegungsachsen (X, Y, Z) zur Bewegung von Werkzeug und Werkstück relativ zueinander und mit einem portablen Bediengerät (10), wobei das Bediengerät (10) umfasst:
- eine Eingabeanordnung (46) zur Eingabe von Steuerbefehlen oder/und Daten,
- eine Zuordnungseinrichtung (56) zur Bereitstellung von Zuordnungsinformation zur Zuordnung des portablen Bediengeräts (10) zu einer der Bewegungseinrichtungen (18, 24, 30) und
- eine Übertragungseinrichtung (52) zur Übertragung der eingegebenen Steuerbefehle oder/und Daten an die Werkzeugmaschine (14),
wobei die Zuordnungseinrichtung (56, 58) eine Sensoranordnung (58) umfasst, welche zur Erkennung der Lageorientierung des Bediengeräts (10) im Raum ausgebildet ist, wobei die Zuordnungseinrichtung (56) dazu ausgebildet ist, die Zuordnungsinformation in Abhängigkeit vom Lageorientierungs-Erkennungsergebnis der Sensoranordnung (58) bereitzustellen,
wobei dem Bediengerät (10) eine bediengeräteseitige Bezugsachse (R) zugeordnet ist, bezüglich welcher die Sensoranordnung (58) die Lageorientierung des Bediengeräts (10) erfasst,
wobei die Werkzeugmaschine (14) oder/und das Bediengerät (10) einen Datenspeicher (38, 44) aufweist, und
wobei an der Werkzeugmaschine (14) oder/und an dem Bediengerät (10) eine Steuereinrichtung (36, 42) vorgesehen ist, welche am Bediengerät (10) eingegebene Steuerbefehle oder/und Daten in Abhängigkeit von der von der Zuordnungseinrichtung (56, 58) bereitgestellten Zuordnungsinformation einer der Bewegungseinrichtungen (18, 24, 30) zuordnet,
**dadurch gekennzeichnet, dass** in dem Datenspeicher (38, 44) der Werkzeugmaschine (14) oder/und des Bediengeräts (10) Informationen über die Lageorientierung der werkzeugmaschinenseitigen Bezugsachsen der einzelnen Bewegungseinrichtungen (18, 24, 30) und über wenigstens einen Lageorientierungs-Toleranzbereich gespeichert sind, und
dass die Zuordnungseinrichtung (56) dazu ausgebildet ist, als Zuordnungsinformation eine Verknüpfung des portablen Bediengeräts (10) mit einer konkreten Bewegungseinrichtung (18, 24, 30) dann bereitzustellen, wenn ein Vergleich des Ergebnisses der Erkennung der Lageorientierung des Bediengeräts (10) mit den gespeicherten Informationen über die Lageorientierung der einzelnen werkzeugmaschinenseitigen Bezugsachsen anzeigt, dass die erkannte Lageorientierung der bediengeräteseitigen Bezugsachse (R) von einer vorbestimmten Lagebeziehung zur werkzeugmaschinenseitigen Bezugsachse der konkreten Bewegungseinrichtung (18, 24, 30) um nicht mehr als den gespeicherten Lageorientierungs-Toleranzbereich abweicht.

2. Werkzeugmaschine (14) mit einem Bediengerät (10) nach Anspruch 1,
**dadurch gekennzeichnet, dass** die vorbestimmte Lagebeziehung der bediengeräteseitigen Bezugsachse (R) relativ zur werkzeugmaschinenseitigen Bezugsachse der konkreten Bewegungseinrichtung (18, 24, 30) die Parallelität ist.

3. Werkzeugmaschine (14) mit einem Bediengerät (10) nach Anspruch 1 oder 2,
**dadurch gekennzeichnet, dass** die werkzeugmaschinenseitigen Bezugsachsen die Bewegungsachsen (X, Y, Z) der Bewegungseinrichtungen (18, 24, 30) sind.

4. Werkzeugmaschine (14) mit einem Bediengerät (10) nach einem der vorhergehenden Ansprüche,
**dadurch gekennzeichnet, dass** die Eingabeanordnung (46) ein manuell um eine Radachse (R) drehbares Handrad (46', 46") aufweist.

5. Werkzeugmaschine (14) mit einem Bediengerät (10) nach Anspruch 4,
**dadurch gekennzeichnet, dass** das Bediengerät (10) eine Multifunktions-Anzeigevorrichtung (50) umfasst, wobei das Handrad (46', 46") ein wenigstens vorübergehend auf der Multifunktions-Anzeigevorrichtung (50) dargestelltes virtuelles Handrad (46") ist.

6. Werkzeugmaschine (14) mit einem Bediengerät (10) nach Anspruch 4,
**dadurch gekennzeichnet, dass** das Handrad (46', 46") ein reales körperliches Handrad (46') ist, welches um die Radachse (R) drehbar an einem Gehäuse (12) des Bediengeräts (10) angeordnet ist.

7. Werkzeugmaschine (14) mit einem Bediengerät (10) nach einem der vorhergehenden Ansprüche,
**dadurch gekennzeichnet, dass** die Sensoranordnung (58) einen Erdmagnetfeldsensor (60) und einen Absolutbeschleunigungssensor (62) umfasst.

8. Werkzeugmaschine (14) mit einem Bediengerät (10) nach einem der vorhergehenden Ansprüche,
**dadurch gekennzeichnet, dass** die Übertragungseinrichtung (52) zur bidirektionalen Signalübertragung zwischen dem Bediengerät (10) und der Werkzeugmaschine (14) ausgebildet ist und das Bediengerät (10) über eine Force-Feedback-Einrichtung (72) verfügt, welche dazu ausgebildet ist, in Abhängigkeit von von der Werkzeugmaschine (14) erhaltenen Daten an der Bearbeitungsstelle auftretende Kräfte am Bediengerät (10) optisch oder/und akustisch oder/und taktil oder/und haptisch wahrnehmbar auszugeben.

9. Werkzeugmaschine (14) mit einem Bediengerät (10) nach Anspruch 8,
**dadurch gekennzeichnet, dass** die Steuereinrichtung (36, 42) die Force-Feedback-Einrichtung (72) derart ansteuert, dass die Force-Feedback-Einrichtung (72) an der Bearbeitungsstelle auftretende Kräfte am Bediengerät (10) in Abhängigkeit von der von der Zuordnungseinrichtung (56, 58) bereitgestellten Zuordnungsinformation wahrnehmbar ausgibt.

10. Werkzeugmaschine (14) mit einem Bediengerät (10) nach einem der vorhergehenden Ansprüche,
**dadurch gekennzeichnet, dass** die Werkzeugmaschine (14) und das Bediengerät (10) durch eine Funkstrecke oder/und Infrarotstrecke zur Steuerbefehl- oder/und Datenübertragung miteinander gekoppelt oder koppelbar sind.

11. Verfahren zur Bedienung einer Werkzeugmaschine (14) mit wenigstens zwei Bewegungseinrichtungen (18, 24, 30) mit in unterschiedlichen Richtungen verlaufenden Bewegungsachsen (X, Y, Z) zur Bewegung von Werkzeug und Werkstück relativ zueinander mittels eines portablen Bediengeräts (10), wobei das Bediengerät (10) umfasst:
- eine Eingabeanordnung (46) zur Eingabe von Steuerbefehlen oder/und Daten,
- eine Zuordnungseinrichtung (56) zur Bereitstellung von Zuordnungsinformation zur Zuordnung des portablen Bediengeräts (10) zu einer der Bewegungseinrichtungen (18, 24, 30) und
- eine Übertragungseinrichtung (52) zur Übertragung der eingegebenen Steuerbefehle oder/und Daten an die Werkzeugmaschine (14),
wobei die Zuordnungseinrichtung (56, 58) eine Sensoranordnung (58) umfasst, welche die Lageorientierung des Bediengeräts (10) im Raum erkennt, wobei die Zuordnungseinrichtung (56) die Zuordnungsinformation in Abhängigkeit vom Lageorientierungs-Erkennungsergebnis der Sensoranordnung (58) bereitstellt,
wobei dem Bediengerät (10) eine bediengeräteseitige Bezugsachse (R) zugeordnet ist, und
wobei die Werkzeugmaschine (14) oder/und das Bediengerät (10) einen Datenspeicher (38, 44) aufweist,
**dadurch gekennzeichnet, dass** jeder Bewegungseinrichtung (18, 24, 30) je eine werkzeugmaschinenseitige Bezugsachse zugeordnet ist,
dass in dem Datenspeicher (38, 44) der Werkzeugmaschine (14) oder/und des Bediengeräts (10) Informationen über die Lageorientierung der werkzeugmaschinenseitigen Bezugsachsen der einzelnen Bewegungseinrichtungen (18, 24, 30) und über wenigstens einen Lageorientierungs-Toleranzbereich gespeichert sind, und
dass das Verfahren die Schritte umfasst:
- Verbringen der bediengeräteseitigen Bezugsachse (R) des Bediengeräts (10) in eine vorbestimmte Lagebeziehung relativ zu einer werkzeugmaschinenseitigen Bezugsachse durch eine mit dem Bediengerät (10) arbeitende Bedienperson,
- Erkennen der Lageorientierung des Bediengeräts (10) durch die Sensoranordnung (58) des Bediengeräts (10),
- Vergleichen des Lageorientierungs-Erkennungsergebnisses mit den in dem Datenspeicher (38, 44) gespeicherten Informationen durch die Zuordnungseinrichtung (56, 58), und dann, wenn die erkannte Lageorientierung der bediengeräteseitigen Bezugsachse (R) von der vorbestimmten Lagebeziehung zu einer der werkzeugmaschinenseitigen Bezugsachsen als einer werkzeugmaschinenseitigen Auswahl-Bezugsachse um nicht mehr als den gespeicherten Lageorientierungs-Toleranzbereich abweicht:
- Bereitstellen einer Zuordnungsinformation in Form einer Verknüpfung des portablen Bediengeräts (10) mit der der Auswahl-Bezugsachse zugeordneten Bewegungseinrichtung (18, 24, 30) durch die Zuordnungseinrichtung (56).

12. Verfahren nach Anspruch 11,
**dadurch gekennzeichnet, dass** es ferner den Schritt umfasst:
- Zuordnen von am Bediengerät (10) eingegebenen Steuerbefehlen oder/und Daten in Abhängigkeit von der von der Zuordnungseinrichtung (56) bereitgestellten Zuordnungsinformation zu der der Auswahl-Bezugsachse zugeordneten Bewegungseinrichtung (18, 24, 30) durch eine an der Werkzeugmaschine (14) oder/und an dem Bediengerät (10) vorgesehene Steuereinrichtung (36, 42).

13. Verfahren nach Anspruch 11 oder 12,
**dadurch gekennzeichnet, dass** die werkzeugmaschinenseitigen Bezugsachsen die Bewegungsachsen (X, Y, Z) der Bewegungseinrichtungen (18, 24, 30) sind.

14. Verfahren nach einem der Ansprüche 11 bis 13,
**dadurch gekennzeichnet, dass** die vorbestimmte Lagebeziehung der bediengeräteseitigen Bezugsachse (R) relativ zur werkzeugmaschinenseitigen Auswahl-Bezugsachse die Parallelität ist.

## Claims

1. Machine-tool (14) with at least two movement devices (18, 24, 30) with movement axes (X, Y, Z) running in different directions for moving tool and workpiece with respect to each other and with a portable operating device (10), the operating device (10) comprising:
- an input arrangement (46) for the input of commands or/and data,
- an assignment device (56) for providing assignment information for assigning the portable operating device (10) to one of the movement devices (18, 24, 30) and
- a transfer device (52) for transferring the entered commands or/and data to the machine-tool (14),
wherein the assignment device (56, 58) comprises a sensor arrangement (58) which is adapted for detecting the spatial orientation of the operating device (10) in space,
wherein the assignment device (56) is adapted for providing the assignment information depending on the spatial orientation detection result of the sensor arrangement (58),
wherein a reference axis at the operating device side (R) is assigned to the operating device (10) in relation to which reference axis the sensor arrangement (58) detects the spatial orientation of the operating device (10),
wherein the machine-tool (14) or/and the operating device (10) comprises a data memory (38, 44), and
wherein a control device (36, 42) is provided at the machine-tool (14) or/and at the operating device (10) which assigns commands or/and data entered into the operating device (10) to one of the movement devices (18, 24, 30) depending on the assignment information provided by the assignment device (56, 58),
**characterised in that** in the data memory (38, 44) of the machine-tool (14) or/and the operating device (10) information on the spatial orientation of the reference axes at the machine-tool side of the different movement devices (18, 24, 30) and on at least one spatial orientation tolerance range is stored, and
**in that** the assignment device (56) is adapted for providing as assignment information a link of the portable operating device (10) to a concrete movement device (18, 24, 30) when a comparison of the result of the detection of the spatial orientation of the operating device (10) with the stored information on the spatial orientation of the different reference axes at the machine-tool side shows that the detected spatial orientation of the reference axis at the operating device side (R) differs from a predetermined spatial relation to the reference axis at the machine-tool side of the concrete movement device (18, 24, 30) by not more than the stored spatial orientation tolerance range.

2. Machine-tool (14) with an operating device (10) according to claim 1,
**characterised in that** the predetermined spatial relation of the reference axis (R) at the operating device side with respect to the reference axis at the machine-tool side of the concrete movement device (18, 24, 30) is parallelism.

3. Machine-tool (14) with an operating device (10) according to claims 1 or 2,
**characterised in that** the reference axes at the machine-tool side are the movement axes (X, Y, Z) of the movement devices (18, 24, 30).

4. Machine-tool (14) with an operating device (10) according to one of the preceding claims,
**characterised in that** the input arrangement (46) comprises a hand wheel (46', 46") which can be rotated about a wheel axis (R) by hand.

5. Machine-tool (14) with an operating device (10) according to claim 4,
**characterised in that** the operating device (10) comprises a multifunctional indicator device (50) wherein the hand wheel (46', 46") is a virtual hand wheel (46") which is at least temporarily indicated on the multifunctional indicator device (50).

6. Machine-tool (14) with an operating device (10) according to claim 4,
**characterised in that** the hand wheel (46', 46") is a real physical hand wheel (46') which is arranged at a housing (12) of the operating device (10) rotatable about the wheel axis (R).

7. Machine-tool (14) with an operating device (10) according to one of the preceding claims,
**characterised in that** the sensor arrangement (58) comprises a terrestrial magnetic field sensor (60) and an absolute acceleration sensor (62).

8. Machine-tool (14) with an operating device (10) according to one of the preceding claims,
**characterised in that** the transfer device (52) is adapted for a bidirectional signal transfer between the operating device (10) and the machine-tool (14) and **in that** the operating device (10) comprises a force-feedback device (72) which is adapted for the optical or/and acoustic or/and tactile or/and haptic output of forces occurring at the processing location at the operating device (10) depending on the data received from the machine-tool (14).

9. Machine-tool (14) with an operating device (10) according to claim 8,
**characterised in that** the control device (36, 42) controls the force-feedback device (72) in such a way that the force-feedback device (72) emits forces occurring at the processing location at the operating device (10) in a perceptible way depending on the assignment information provided by the assignment device (56, 58).

10. Machine-tool (14) with an operating device (10) according to one of the preceding claims,
**characterised in that** the machine-tool (14) and the operating device (10) are coupled or can be coupled by a radio path or and an infrared path for a command or/and data transfer.

11. Method for operating a machine-tool (14) with at least two movement devices (18, 24, 30) with movement axes (X, Y, Z) extending in different directions for moving tool and workpiece with respect to each other by means of a portable operating device (10), the operating device (10) comprising:
- an input arrangement (46) for the input of commands or/and data,
- an assignment device (56) for providing assignment information for assigning the portable operating device (10) to one of the movement devices (18, 24, 30) and
- a transfer device (52) for transferring entered commands or/and data to the machine-tool (14),
wherein the assignment device (56, 58) comprises a sensor arrangement (58) which is adapted for detecting the spatial orientation of the operating device (10) in space,
wherein the assignment device (56) is adapted for providing the assignment information depending on the spatial orientation detection result of the sensor arrangement (58),
wherein a reference axis (R) at the operating device side is assigned to the operating device (10),
wherein the machine-tool (14) or/and the operating device (10) comprise a data memory (38, 44),
**characterized in that** a reference axis at the machine-tool side is assigned to each movement device (18, 24, 30),
**in that** information on the spatial orientation of the reference axes at the machine-tool side of the different movement devices (18, 24, 30) and on at least one spatial orientation tolerance range is stored in the data memory (38, 44) of the machine-tool (14) or/and of the operating device (10), and
**in that** the method comprises the following steps:
- moving the reference axis at the operating device side (R) of the operating device (10) into a predetermined spatial relationship with respect to a reference axis at the machine-tool side by an operator working with the operating device (10),
- detecting the spatial orientation of the operating device (10) by the sensor arrangement (58) of the operating device (10),
- comparing the spatial orientation detection result with the information stored in the data memory (38, 44) by the assignment device (56, 58) and, when the detected spatial orientation of the reference axis at the operating device side (R) differs from the predetermined spatial relation to one of the reference axes at the machine-tool as a selection reference axis at the machine-tool side by not more than the stored spatial orientation tolerance range:
- providing an assignment information in the form of a link of the portable operating device (10) to the movement device (18, 24, 30) assigned to the selection reference axis by the assignment device (56).

12. Method according to claim 11,
**characterised in that** it furthermore comprises the following step:
assigning control of commands or/and data entered at the operating device (10) depending on the assignment information provided by the assignment device (56) on the movement device (18, 24, 30) assigned to the selection reference axis by a control device (36, 42) provided at the machine-tool (14) or/and at the operating device (10).

13. Method according to claim 11 or 12,
**characterised in that** the reference axes at the machine-tool side are the movement axes (X, Y, Z) of the movement devices (18, 24, 30).

14. Method according to claims 11 to 13,
**characterised in that** the predetermined spatial relation of the reference axis at the operating device side (R) with respect to the selection reference axis at the machine-tool side is parallelism.

## Revendications

1. Machine-outil (14) avec au moins deux dispositifs de mouvement (18, 24, 30) avec des axes de mouvement (X, Y, Z) s'étendant dans des sens différents pour déplacer outil et pièce de travail l'un par rapport à l'autre et avec un dispositif de commande (10) portable, le dispositif de commande (10) comprenant :
un arrangement d'entrée (46) pour entrer des instructions de commande ou/et des données,
- un dispositif d'attribution (56) pour prévoir des informations d'attribution pour attribuer le dispositif de commande portable (10) à un des dispositifs de mouvement (18, 24, 30) et
- un dispositif de transmission (52) pour transmettre les instructions de commande ou/et les données entrées à la machine-outil (14),
l'arrangement d'attribution (56, 58) comprenant un arrangement de capteur (58) adapté pour détecter l'orientation spatiale du dispositif de commande (10) dans l'espace, le dispositif d'attribution (56) étant adapté pour prévoir l'information d'attribution en fonction du résultat de détection d'orientation spatiale de l'arrangement de capteur (58),
un axe de référence côté dispositif de commande (R) étant attribué au dispositif de commande (10), par rapport auquel l'arrangement de capteur (58) détecte l'orientation spatiale du dispositif de commande (10),
la machine-outil (14) ou/et le dispositif de commande (10) comprenant un mémoire de données (38, 44), et
un dispositif de contrôle (36, 42) étant prévu à la machine-outil (14) ou/et au dispositif de commande (10), le dispositif de contrôle attribuant des instructions de commande ou/et des données entrées au dispositif de commande (10) en fonction de l'information d'attribution mise à disposition par l'arrangement d'attribution (56, 58) a un des dispositifs de mouvement (18, 24, 30),
**caractérisé en ce que** dans le mémoire de données (38, 44) de la machine-outil (14) ou/et du dispositif de commande (10) des informations concernant l'orientation spatiale des axes de référence côté machine-outil des différents dispositifs de mouvement (18, 24, 30) et concernant au moins une gamme de tolérance d'orientation spatiale sont mémorisées, et
**en ce que** le dispositif d'attribution (56) est adapté pour mettre à disposition en tant qu'information d'attribution un lien entre le dispositif de commande portable (10) et un dispositif de mouvement concret (18, 24, 30) quand une comparaison du résultat de la détection de l'orientation spatiale du dispositif de commande (10) avec les informations mémorisées concernant l'orientation spatiale des différents axes de référence côté machine-outil indique que l'orientation spatiale détecté de l'axe de référence côté dispositif de commande (R) est différente d'une orientation spatiale prédéterminée par rapport à l'axe de référence côté machine-outil du dispositif de mouvement concret (18, 24, 30) n'excédant pas la gamme de tolérance d'orientation spatiale mémorisée.

2. Machine-outil (14) avec un dispositif de commande (10) selon la revendication 1,
**caractérisé en ce que** l'orientation spatiale prédéterminée de l'axe de référence côté dispositif de commande (R) par rapport à l'axe de référence côté machine-outil du dispositif de mouvement concret (18, 24, 30) est le parallélisme.

3. Machine-outil (14) avec un dispositif de commande (10) selon les revendications 1 ou 2,
**caractérisé en ce que** les axes de référence côté machine-outil sont les axes de mouvement (X, Y, Z) des dispositifs de mouvement (18, 24, 30).

4. Machine-outil (14) avec un dispositif de commande (10) selon une des revendications précédentes,
**caractérisé en ce que** l'arrangement d'entrée (46) comprend un volant (46', 46") qui peut être tourné manuellement autour d'un axe de volant (R).

5. Machine-outil (14) avec un dispositif de commande (10) selon la revendication 4,
**caractérisé en ce que** le dispositif de commande (10) comprend un dispositif indicateur multifonctionnel (50), le volant (46', 46") étant un volant virtuel (46") représenté au moins temporairement sur l'indicateur multifonctionnel (50).

6. Machine-outil (14) avec un dispositif de commande (10) selon la revendication 4,
**caractérisé en ce que** le volant (46', 46") est un vrai volant physique (46') qui est arrangé à un boîtier (12) du dispositif de commande (10) de manière rotative autour de l'axe du volant (R).

7. Machine-outil (14) avec un dispositif de commande (10) selon une des revendications précédentes,
**caractérisé en ce que** l'arrangement de capteur (58) comprend un capteur de champ magnétique terrestre (60) et un capteur d'accélération absolue (62).

8. Machine-outil (14) avec un dispositif de commande (10) selon une des revendications précédentes,
**caractérisé en ce que** le dispositif de transmission (52) est adapté pour une transmission de signaux bidirectionnelle entre le dispositif de commande (10) et la machine-outil (14) et **en ce que** le dispositif de commande (10) comprend un dispositif de retour de force (72) adapté pour émettre des forces agissant au site de traitement au dispositif de commande (10) pour être perçues de manière optique ou/et acoustique ou/et tactile ou/et haptique en fonction des données reçues de la machine-outil (14).

9. Machine-outil (14) avec un dispositif de commande (10) selon la revendication 8,
**caractérisé en ce que** le dispositif de contrôle (36, 42) contrôle le dispositif de retour de force (72) de sorte que le dispositif de retour de force (72) émet des forces agissant au site de traitement de manière percevable au dispositif de commande (10) en fonction de l'information d'attribution mise à disposition par le dispositif d'attribution (56, 58).

10. Machine-outil (14) avec un dispositif de commande (10) selon une des revendications précédentes,
**caractérisé en ce que** la machine-outil (14) et le dispositif de commande (10) sont accouplés ou peuvent être accouplés par un trajet radio ou/et un trajet infrarouge pour la transmission d'instruction de commande ou/et la transmission de données.

11. Procédé pour opérer une machine-outil (14) avec au moins deux dispositifs de mouvement (18, 24, 30) avec des axes de mouvement (X, Y, Z) s'étendant dans des sens différents pour déplacer outil et pièce de travail l'un par rapport à l'autre et avec un dispositif de commande (10) portable, le dispositif de commande (10) comprenant :
un arrangement d'entrée (46) pour entrer des instructions de commande ou/et des données,
- un dispositif d'attribution (56) pour prévoir des informations d'attribution pour attribuer le dispositif de commande portable (10) à un des dispositifs de mouvement (18, 24, 30) et
- un dispositif de transmission (52) pour transmettre les instructions de commande ou/et les données entrés à la machine-outil (14),
l'arrangement d'attribution (56, 58) comprenant un arrangement de capteur (58) adapté pour détecter l'orientation spatiale du dispositif de commande (10), le dispositif d'attribution (56) étant adapté pour prévoir l'information d'attribution en fonction du résultat de détection d'orientation spatiale de l'arrangement de capteur (58),
un axe de référence côté dispositif de commande (R) étant attribué au dispositif de commande (10),
la machine-outil (14) ou/et le dispositif de commande (10) comprenant un mémoire de données (38, 44),
**caractérisé en ce qu'**un axe de référence côté machine-outil respectif est attribué à chaque dispositif de mouvement (18, 24, 30),
**en ce que** dans le mémoire de données (38, 44) de la machine-outil (14) ou/et du dispositif de commande (10) des informations sont mémorisées concernant l'orientation spatiale des axes de référence côté machine-outil des différents dispositifs de mouvement (18, 24, 30) et concernant au moins une gamme de tolérance de l'orientation spatiale, et
**en ce que** le procédé comprend les étapes suivantes :
- faire passer l'axe de référence côté dispositif de commande (R) du dispositif de commande (10) dans une relation spatiale prédéterminée par rapport à un axe de référence côté dispositif de commande (R) par un opérateur travaillant avec le dispositif de commande (10),
- détecter l'orientation spatiale du dispositif de commande (10) par l'arrangement de capteur (58) du dispositif de commande (10),
- comparer le résultat de détection d'orientation spatiale aux informations mémorisées dans le mémoire de données (38, 44) par le dispositif d'attribution (56, 58) et, quand l'orientation spatiale détectée de l'axe de référence côté dispositif de commande (R) est différente de l'orientation spatiale prédéterminée par rapport à un des axes de référence côté machine-outil en tant qu'axe de référence côté machine-outil sélecté par une valeur qui n'excède pas la gamme de tolérance d'orientation spatiale mémorisée :
- mettre à disposition une information d'attribution sous forme d'un lien du dispositif de commande portable (10) au dispositif de mouvement (18, 24, 30) attribué a l'axe de référence sélecté par le dispositif d'attribution (56).

12. Procédé selon la revendication 11,
**caractérise en ce qu'**il comprend en outre l'étape suivante :
- attribuer des instructions de commande ou/et des données entrés dans le dispositif de commande (10) en fonction des informations d'attribution mises à disposition par le dispositif d'attribution (56) au dispositif de mouvement (18, 24, 30) attribué à l'axe de référence sélecté par un dispositif de contrôle (36, 42) prévu à la machine-outil (14) ou/et au dispositif de commande (10).

13. Procédé selon la revendication 11 ou 12,
**caractérisé en ce que** les axes de référence côté machine-outil sont les axes de mouvement (X, Y, Z) des dispositifs de mouvement (18, 24, 30).

14. Procédé selon une des revendications 11 à 13,
**caractérisé en ce que** l'orientation spatiale prédéterminée de l'axe de référence côté dispositif de commande (R) par rapport à l'axe de référence côté machine-outil est le parallélisme.
